**Europäisches Patentamt**

**European Patent Office**

**Office européen des brevets**

(19)

(11) **EP 1 317 146 A2**

(12) **EUROPEAN PATENT APPLICATION**

(43) Date of publication:
**04.06.2003 Bulletin 2003/23**

(51) Int Cl.$^7$: **H04N 7/36**

(21) Application number: **02012991.2**

(22) Date of filing: **12.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **03.12.2001 JP 2001369139**

(71) Applicant: **Monolith Co., Ltd.**
**Tokyo 106-0045 (JP)**

(72) Inventors:
• **Akiyoshi, Kozo**
  **Tokyo 106-0045 (JP)**
• **Akiyoshi, Nobuo**
  **Tokyo 106-0045 (JP)**

(74) Representative: **Pfenning, Meinig & Partner GbR**
**Mozartstrasse 17**
**80336 München (DE)**

(54) **Image matching method and apparatus**

(57)     An image input unit (12) inputs data of key frames. A matching processor (14) computes information of corresponding points between the key frames. A region setting unit (20) sets a region in which the corresponding point should be searched for in the image input unit (12) based on the shutter speed of a camera.

**EP 1 317 146 A2**

KF

```
         IMAGE INPUT
            UNIT          ~12
              |
             KF
              |
       INTERVAL
       DETECTING         ~18
         UNIT
              |
    REGION SETTING ◄─── TABLE
        UNIT        ~20      ~22
              |
      MATCHING
      PROCESSOR       ~14
              |
             CI
              |
    STREAM GENERATOR   ~16
              |
             CBS          10
```

**Fig.18**

**Description**

The present invention relates to an image processing technology, and it particularly relates to a technique of acquiring corresponding points between two images based on a matching technology.

MPEG (Motion Picture Expert Group), the de-facto world standard for the compression of motion pictures, has broaden its target area from storage media such as CDs to transmission media such as network or broadcasting. Without compressing and encoding techniques, in the center of which exists the MPEG, digital broadcasting can not be realized. A barrier that has existed between broadcasting and network communication is now disappearing, so service providers inevitably have to become more diverse. Today, in the broadband age, it is difficult to predict in what way the digital culture will achieve its development.

In such a chaotic situation, however, there is one certain direction in which the development of motion picture compressing technique would proceed. That is, to pursue higher rate of compression and higher quality of pictures. It is a well-known fact that in MPEG, block-noise sometimes spoils higher compression. The more the distribution of motion pictures becomes usual, the more consideration for real time processing is needed.

From another point of view, preparing substantial contents suitable for utilizing broadened transmission band is also an important problem to be solved. The higher rate of the compression of motion pictures is still being pursued. It can not be said, however, that high quality contents are sufficiently provided when it comes to efficiently utilizing the broadened transmission band.

The present invention has been achieved in view of the above current situation, and accordingly an object thereof is to provide a matching technology which realizes the efficient compression of image data. Another object of the present invention is to provide an image matching technology which can fulfill two opposite requests -that is, to keep good quality of images and to achieve a higher rate of compression. Still another object is to improve the image quality of intermediate frames in applications in which the intermediate picture frames are generated by interpolating key frames. Yet another object is to provide a matching technology suitable for cameras becoming more diverse and to have higher quality. Yet another object is to provide a matching technology which can realize the improvement of the quality of image contents.

The present invention relates to an image matching technology. This technology can utilize an image matching technology (hereinafter referred to as the "base technology") which has already proposed in Japanese patent No. 2927350, USP 6,018,592 and USP 6,137,910 assigned to the same assignee.

A preferred embodiment of the present invention relates to an image matching technology. This technology limits a region to be examined in a second key frame in which a point corresponding to a point in a first key frame is searched for (hereinafter simply referred to as a "region to be examined") based on time interval of the key frames in generating the information of the corresponding points. This time interval may be specified according to a camera used for shooting the key frames or the speed of shooting the key frames.

The time interval and the key frames may be recorded in a manner that they are associated with each other and then information regarding the interval may be read out and utilized at the stage of a matching. When the satisfactory corresponding point is not found in the limited region, matching result indicating the fact may be informed to a user or the corresponding point may be searched for outside the limited region.

The key frames may be acquired by shooting pictures with an actual camera, not only acquired via a network or by being read out from a storage apparatus. The "key frames" are image frames to be the objects of the matching, and they may be I, P or B pictures in MPEG. This technology may further include generating the intermediate frames by interpolation based on the information of the corresponding points acquired between the key frames.

Another embodiment of the present invention relates to an image matching apparatus. The apparatus may comprise an image input unit which acquires the first and second key frames, a matching processor which generates the information of the corresponding points between the key frames and a region setting unit which sets the region to be examined in the second key frame based on the time interval of the key frames.

This apparatus further comprises an interval detecting unit which detects the information of the time interval included in or added to the acquired information of the key frames and a table which describes the correspondence between the detected information and the region to be examined. The region setting unit may set the region by specifying the detected information in the table. The region setting unit may set a predetermined default region as the region to be examined when the information about the time interval is not detected. The default region may be, for example, the entire second key frame.

Among the embodiments described above, the base technology can be utilized in generating the information of the corresponding points between key frames. The base technology is not, however, indispensable. Any arbitrary replacement or substitution of the above described structural components and functions, expressions replaced or substituted in part or whole between a method and an apparatus as well as addition thereof, and expressions represented in a computer program, recording medium or the like are all effective and encompassed by the present invention.

The invention will be now described by way of example with reference to the accompanying drawings, throughout which like parts are referred to by like references, and in which:

Fig.1(a) is an image obtained as a result of the application of an averaging filter to a human facial image.
Fig.1(b) is an image obtained as a result of the application of an averaging filter to another human facial image.
Fig.1(c) is an image of a human face at $p^{(5,0)}$ obtained in a preferred embodiment in the base technology.
Fig.1(d) is another image of a human face at $p^{(5,0)}$ obtained in a preferred embodiment in the base technology.
Fig.1(e) is an image of a human face at $p^{(5,1)}$ obtained in a preferred embodiment in the base technology.
Fig.1(f) is another image of a human face at $p^{(5,1)}$ obtained in a preferred embodiment in the base technology.
Fig.1(g) is an image of a human face at $p^{(5,2)}$ obtained in a preferred embodiment in the base technology.
Fig.1(h) is another image of a human face at $p^{(5,2)}$ obtained in a preferred embodiment in the base technology.
Fig.1(i) is an image of a human face at $p^{(5,3)}$ obtained in a preferred embodiment in the base technology.
Fig.1(j) is another image of a human face at $p^{(5,3)}$ obtained in a preferred embodiment in the base technology.
Fig.2(R) shows an original quadrilateral.

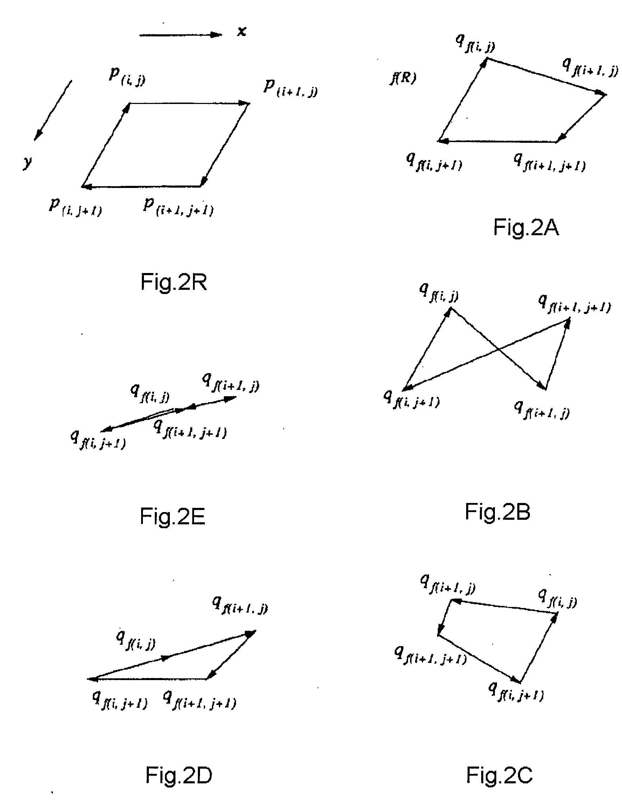

Fig.2(A) shows an inherited quadrilateral.
Fig.2(B) shows an inherited quadrilateral.
Fig.2(C) shows an inherited quadrilateral.
Fig.2(D) shows an inherited quadrilateral.
Fig.2(E) shows an inherited quadrilateral.

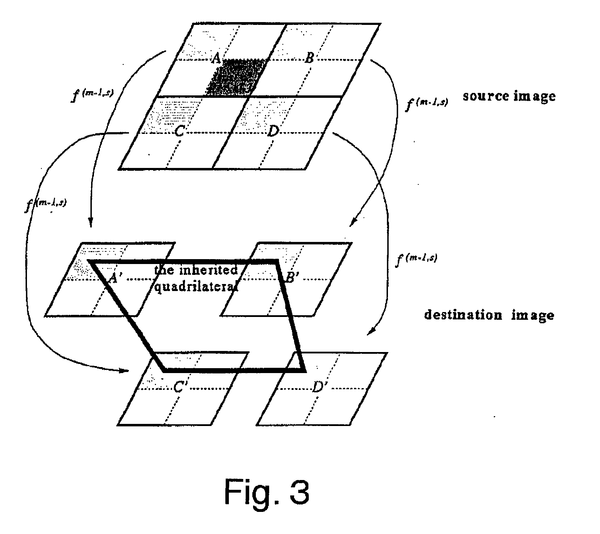

Fig.3 is a diagram showing the relationship between a source image and a destination image and that between the m-th level and the (m-1)th level , using a quadrilateral.

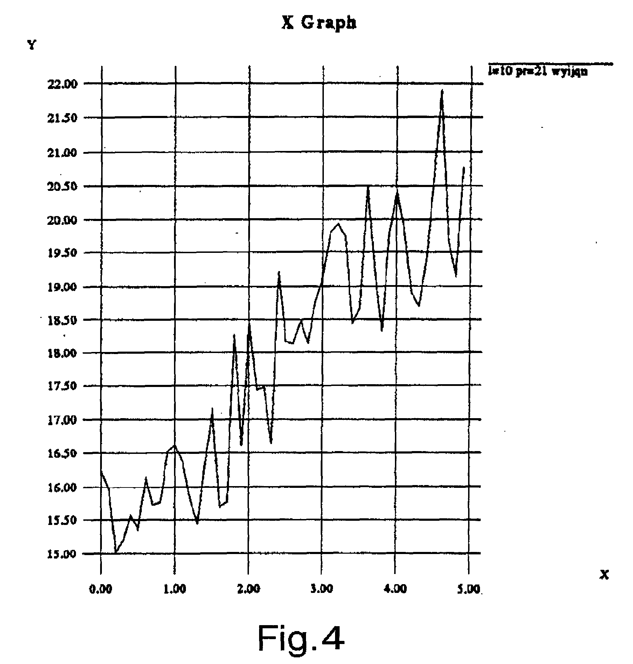

Fig.4 shows the relationship between a parameter $\eta$ (represented by x-axis) and energy $C_f$ (represented by y-axis).

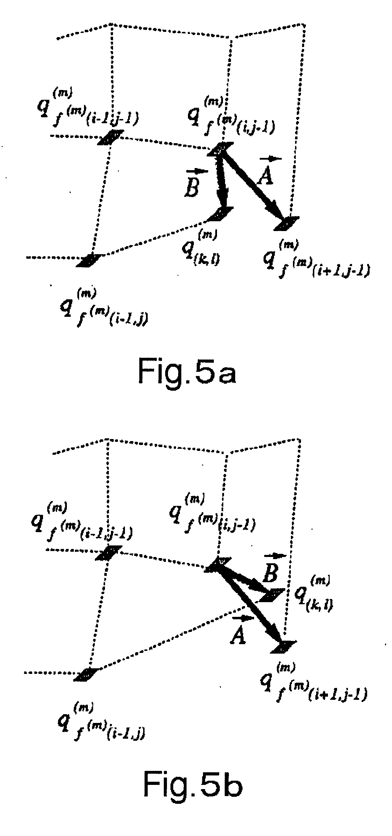

Fig.5 (a) is a diagram illustrating determination of whether or not the mapping for a certain point satisfies the bijectivity condition through the outer product computation.
Fig.5 (b) is a diagram illustrating determination of whether or not the mapping for a certain point satisfies the bijectivity condition through the outer product computation.

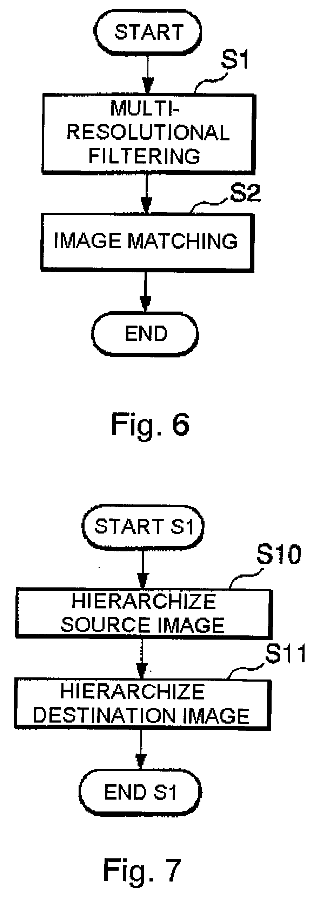

Fig.6 is a flowchart of the entire procedure of a preferred embodiment in the base technology.
Fig.7 is a flowchart showing the details of the process at S1 in Fig.6.

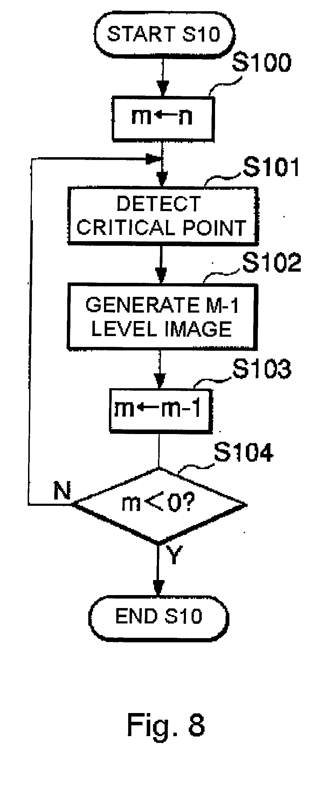

Fig.8 is a flowchart showing the details of the process at S10 in Fig.7.

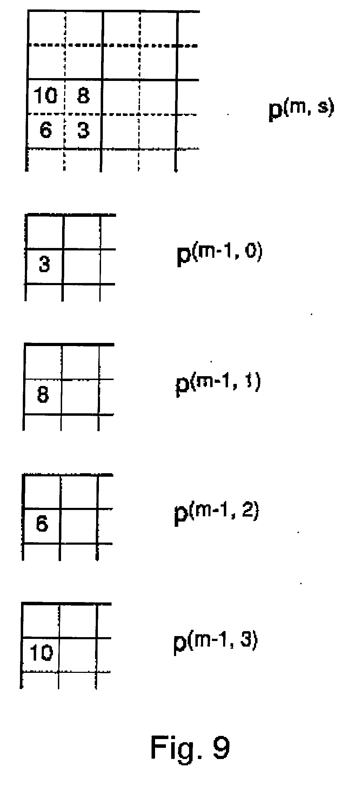

Fig.9 is a diagram showing correspondence between partial images of the m-th and (m-1)th levels of resolution.

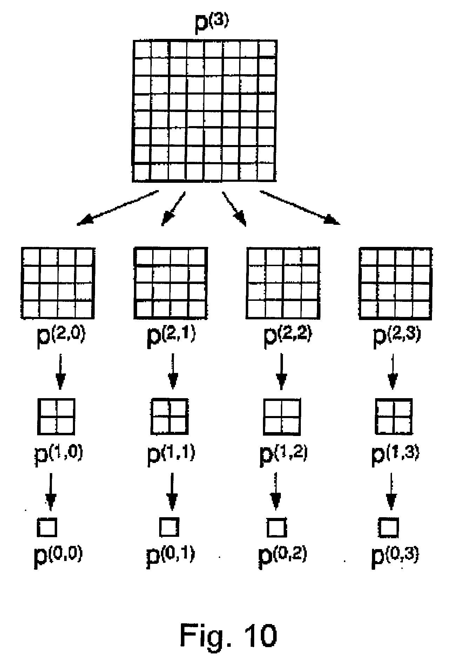

Fig.10 is a diagram showing source images generated in the embodiment in the base technology.

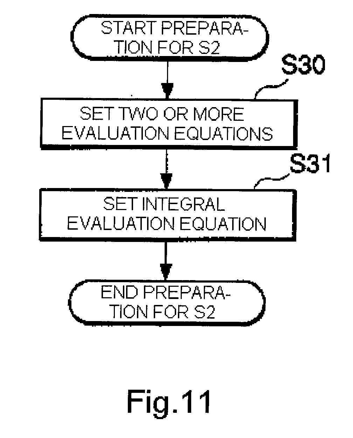

Fig.11 is a flowchart of preparation procedure for S2 in Fig.6.

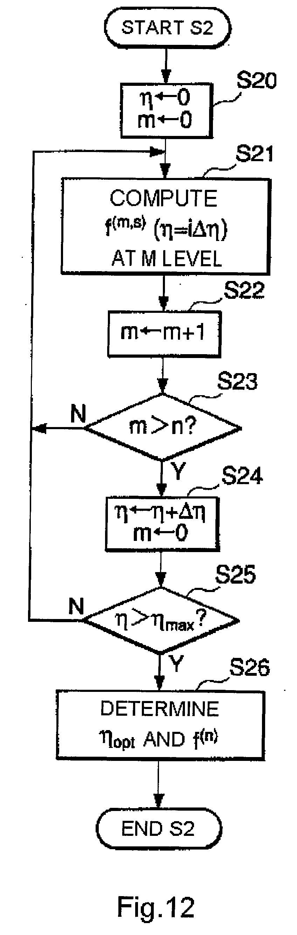

Fig.12 is a flowchart showing the details of the process at S2 in Fig.6.

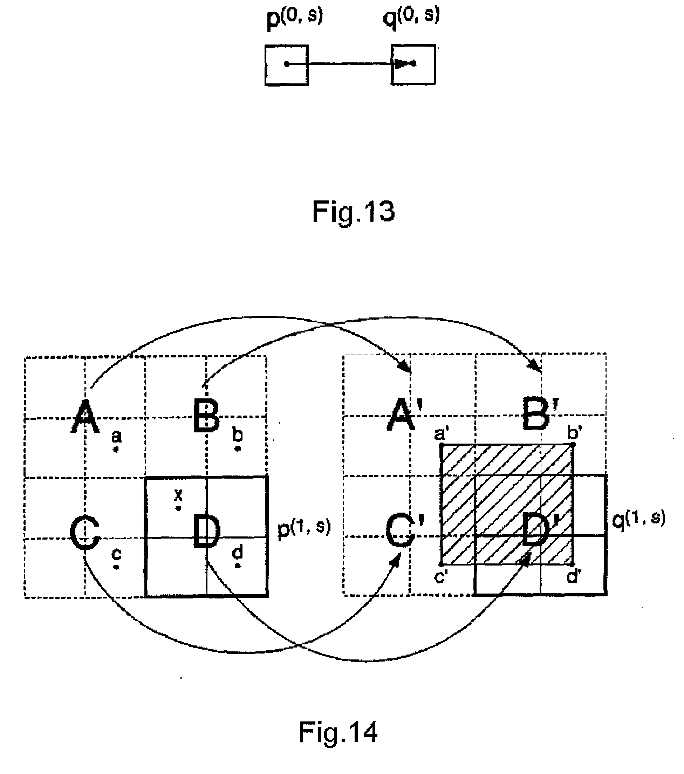

Fig.13 is a diagram showing the way a submapping is determined at the 0-th level.
Fig.14 is a diagram showing the way a submapping is determined at the first level.

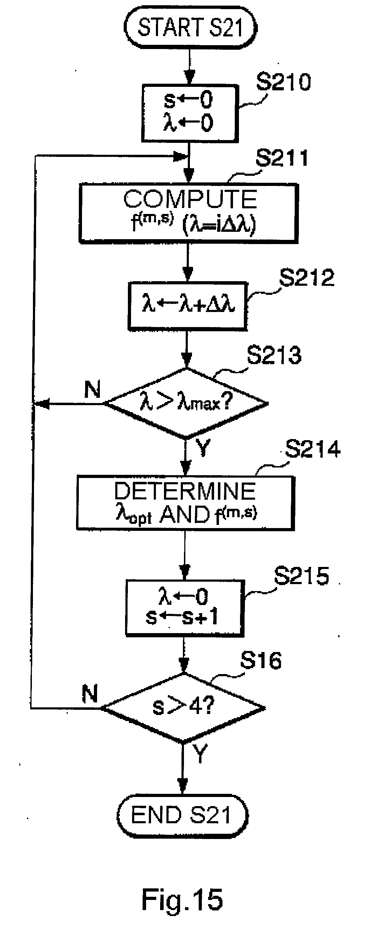

Fig.15 is a flowchart showing the details of the process at S21 in Fig.6.

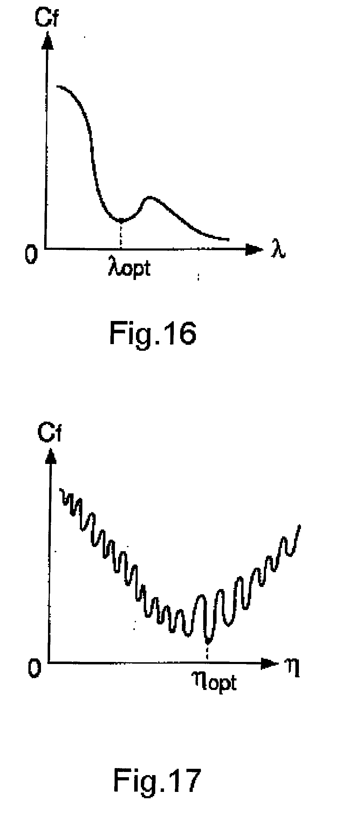

Fig.16 is a graph showing the behavior of energy $C_f^{(m,s)}$ corresponding to $f^{(m,s)}$ ($\lambda = i\Delta\lambda$) which has been obtained for a certain $f^{(m,s)}$ while changing $\lambda$.
Fig.17 is a diagram showing the behavior of energy $C_f^{(n)}$ corresponding to f(n) ($\eta = i\Delta\eta$) ($i$=0,1) which has been obtained while changing $\eta$.

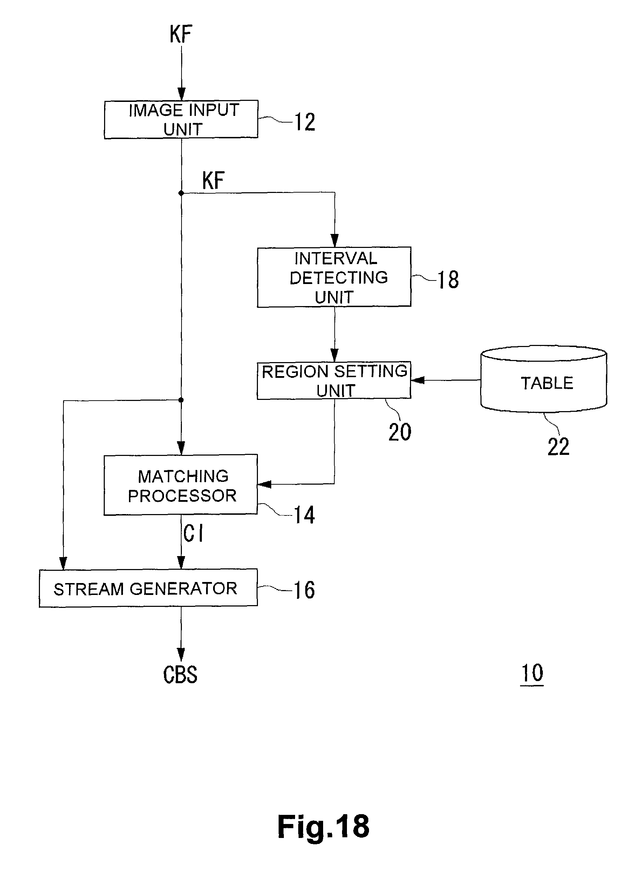

Fig.18 shows the structure of an image matching apparatus according to one embodiment.

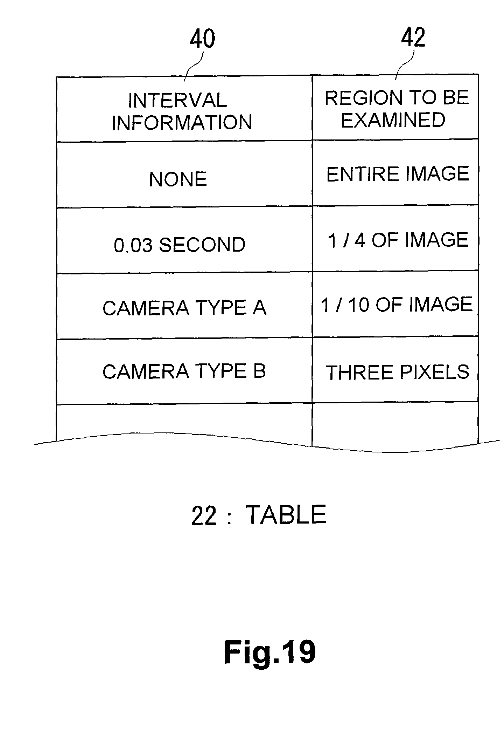

Fig.19 shows the structure of a table utilized by the apparatus shown in Fig. 18.

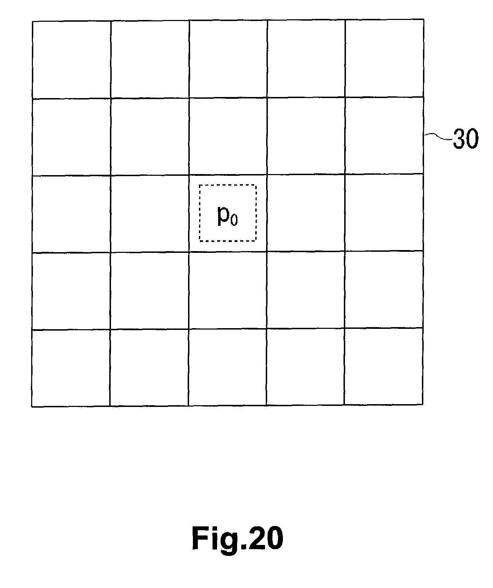

Fig.20 is an illustration of a region to be examined limited by the apparatus shown in Fig. 18.

The invention will now be described based on the preferred embodiments.

At first, the multiresolutional critical point filter technology and the image matching processing using that technology, both of which will be utilized in the preferred embodiments, will be described in detail as " Base Technology." Namely, the following sections of [1] and [2] belong to the base technology, where [1] describes elemental techniques and [2] describes a processing procedure. These techniques are patented under Japanese Patent No.2927350 and owned by the same inventor of the present invention, and they realize an optimal achievement when combined with the present invention. However, it is to be noted that the image matching techniques which can be adopted in the present embodiments are not limited to this. In Fig.18 to 20, image processing techniques utilizing the base technology will be described in a specific manner.

**Base Technology**

[1] Detailed description of elemental techniques

[1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, There is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval $[0, N] \subset R$ is denoted by I. A pixel of the image at position (i, j) is denoted by $p^{(i,j)}$ where i,j . I.

Here, a multiresolutional hierarchy is introduced. Hierarchized image groups are produced by a multiresolutional filter. The multiresolutional filter carries out a two dimensional search on an original image and detects critical points therefrom. The multiresolutinal filter then extracts the critical points from the original image to construct another image having a lower resolution. Here, the size of each of the respective images of the m-th level is denoted as $2^m X 2^m$ (0 m n). A critical point filter constructs the following four new hierarchical images recursively, in the direction descending from n.

$$p_{(i,j)}^{(m,0)} = \min(\min(p_{(2i,2j)}^{(m+1,0)}, p_{(2i,2j+1)}^{(m+1,0)}), \min(p_{(2i+1,2j)}^{(m+1,0)}, p_{(2i+1,2j+1)}^{(m+1,0)}))$$

$$p_{(i,j)}^{(m,1)} = \max(\min(p_{(2i,2j)}^{(m+1,1)}, p_{(2i,2j+1)}^{(m+1,1)}), \min(p_{(2i+1,2j)}^{(m+1,1)}, p_{(2i+1,2j+1)}^{(m+1,1)}))$$

$$p_{(i,j)}^{(m,2)} = \min(\max(p_{(2i,2j)}^{(m+1,2)}, p_{(2i,2j+1)}^{(m+1,2)}), \max(p_{(2i+1,2j)}^{(m+1,2)}, p_{(2i+1,2j+1)}^{(m+1,2)}))$$

$$p_{(i,j)}^{(m,3)} = \max(\max(p_{(2i,2j)}^{(m+1,3)}, p_{(2i,2j+1)}^{(m+1,3)}), \max(p_{(2i+1,2j)}^{(m+1,3)}, p_{(2i+1,2j+1)}^{(m+1,3)})) \quad (1)$$

where let

$$p_{(i,j)}^{(n,0)} = p_{(i,j)}^{(n,1)} = p_{(i,j)}^{(n,2)} = p_{(i,j)}^{(n,3)} = p_{(i,j)} \quad (2)$$

The above four images are referred to as subimages hereinafter. When $\min_{x t x+1}$ and $\max_{x t x+1}$ are abbreviated to and $\alpha$ and $\beta$, respectively, the subimages can be expressed as follows.

$$P^{(m,0)} = \alpha(x)\alpha(y)p^{(m+1,0)}$$

$$P^{(m,1)} = \alpha(x)\beta(y)p^{(m+1,1)}$$

$$P^{(m,2)} = \beta(x)\alpha(y)p^{(m+1,2)}$$

$$P^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter detects a critical point of the original image for every block consisting of 2 X 2 pixels. In this detection, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are detected as a local maximum point, a local minimum point, and a saddle point, respectively.

By using the critical point filter, an image (1 pixel here) of a critical point detected inside each of the respective blocks serves to represent its block image (4 pixels here). Thus, resolution of the image is reduced. From a singularity theoretical point of view, $\alpha(x)\alpha(y)$ preserves the local minimum point(minima point),$\beta(x)\beta(y)$ preserves the local maximum point(maxima point), $\alpha(x)\beta(y)$ and $\beta(x) \alpha(y)$ preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

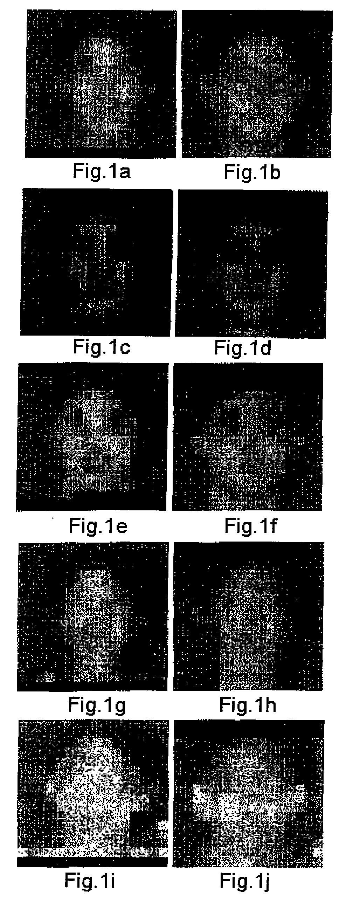

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1(i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $p^{(n)}_{(i,j)}$ and that of the destination image at (k,l) is denoted by $q^{(n)}_{(k,l)}$ where i, j, k, l ∈ I. The energy of the mapping between the images (described later) is then defined. This energy is determined by the difference in the intensity of the pixel of the source image and its corresponding pixel of the destination image and the smoothness of the mapping. First, the mapping $f^{(m,0)}:p^{(m,0)} . q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$f^{(m,i)}:p^{(m,\sigma(i))} \rightarrow q^{(m,\sigma(i))} \tag{3}$$

where $\sigma(i)\in\{0,1,2,3\}$.

[1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)}$: $I/2^{n-m} \times I/2^{n-m} \to I/2^{n-m} \times I/2^{n-m}$ (s = 0,1,...), where $f^{(m,s)}_{(i,j)} = (k,l)$ means that $p^{(m,s)}_{(i,j)}$ of the source image is mapped to $q^{(m,s)}_{(k,l)}$ of the destination image. For simplicity, when $f(i,j)=(k,l)$ holds, a pixel $q^{(k,l)}_{(k,l)}$ is denoted by $q_{f(i,j)}$.

When the data sets are discrete as image pixels (grid points) treated in the base technology, the definition of bijectivity is important. Here, the bijection will be defined in the following manner, where i,i',j,j',k and l are all integers. First, each square region (4)

$$p^{(m,s)}_{(i,j)} p^{(m,s)}_{(i+1,j)} p^{(m,s)}_{(i+1,j+1)} p^{(m,s)}_{(i,j+1)} \tag{4}$$

on the source image plane denoted by R is considered, where i = 0, ..., $2^m-1$, and j = 0, ..., $2^m-1$. The edges of R are directed as follows.

$$\overrightarrow{p^{(m,s)}_{(i,j)}\, p^{(m,s)}_{(i+1,j)}}\,, \overrightarrow{p^{(m,s)}_{(i+1,j)}\, p^{(m,s)}_{(i+1,j+1)}}\,, \overrightarrow{p^{(m,s)}_{(i+1,j+1)}\, p^{(m,s)}_{(i,j+1)}} \text{ and } \overrightarrow{p^{(m,s)}_{(i,j+1)}\, p^{(m,s)}_{(i,j)}} \tag{5}$$

This square will be mapped by f to a quadrilateral on the destination image plane. The quadrilateral (6)

$$q^{(m,s)}_{(i,j)} q^{(m,s)}_{(i+1,j)} q^{(m,s)}_{(i+1,j+1)} q^{(m,s)}_{(i,j+1)} \tag{6}$$

denoted by $f^{(m,s)}(R)$ should satisfy the following bijectivity conditions(BC).

$$(\text{So, } f^{(m,s)}(R)=f^{(m,s)}(p^{(m,s)}_{(i,j)} p^{(m,s)}_{(i+1,j)} p^{(m,s)}_{(i+1,j+1)} p^{(m,s)}_{(i,j+1)} = q^{(m,s)}_{(i,j)} q^{(m,s)}_{(i+1,j)} q^{(m,s)}_{(i+1,j+1)} q^{(m,s)}_{(i,j+1)} )$$

    1. The edges of the quadrilateral $f^{(m,s)}(R)$ should not intersect one another.
    2. The orientation of the edges of $f^{(m,s)}(R)$ should be the same as that of R (clockwise in the case of Fig. 2).
    3. As a relaxed condition, retraction mapping is allowed.

The bijectivity conditions stated above shall be simply referred to as BC hereinafter.

Without a certain type of a relaxed condition, there would be no mappings which completely satisfy the BC other than a trivial identity mapping. Here, the length of a single edge of $f^{(m,s)}(R)$ may be zero. Namely, $f^{(m,s)}(R)$ may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.

In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=$2^m$-1, j=0, j=$2^m$-1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C^{(m,s)}_{(i,j)}$ of the mapping $f^{(m,s)}$ at(i,j) is determined by the following equation (7).

$$C^{(m,s)}_{(i,j)} = \left| V(p^{(m,s)}_{(i,j)}) - V(q^{(m,s)}_{f(i,j)}) \right|^2 \tag{7}$$

where $V(p^{(m,s)}_{(i,j)})$ and $V(q^{(m,s)}_{f(i,j)})$ are the intensity values of the pixels $p^{(m,s)}_{(i,j)}$ and $q^{(m,s)}_{f(i,j)}$, respectively. The total energy $C^{(m,s)}$ of f is a matching evaluation equation, and can be defined as the sum of $C^{(m,s)}_{(i,j)}$ as shown in the following equation (8).

$$C_f^{(m,s)} = \sum_{i=0}^{i=2^m-1} \sum_{j=0}^{j=2^m-1} C_{(i,j)}^{(m,s)} \qquad --- \quad (8)$$

[1. 3. 2. 2] Cost related to the locations of the pixel for smooth mapping

In order to obtain smooth mappings, another energy $D_f$ for the mapping is introduced. The energy $D_f$ is determined by the locations of $p_{(i,j)}^{(m,s)}$ and $q_{f(i,j)}^{(m,s)}$ (i=0,1,...,2$^m$-1, j=0,1,...,2$^m$-1), regardless of the intensity of the pixels. The energy $D_{(i,j)}^{(m,s)}$ of the mapping f(m,s) at a point (i,j) is determined by the following equation (9).

$$D_{(i,j)}^{(m,s)} = \eta E_{0(i,j)}^{(m,s)} + E_{1(i,j)}^{(m,s)} \qquad (9)$$

where the coefficient parameter $\eta$ which is equal to or greater than 0 is a real number. And we have

$$E_{0(i,j)}^{(m,s)} = \left\| (i,j) - f^{(m,s)}(i,j) \right\|^2 \qquad (10)$$

$$E_{1(i,j)}^{(m,s)} = \sum_{i'=i-1}^{i} \sum_{j'=j-1}^{j} \left\| (f^{(m,s)}(i,j) - (i,j)) - (f^{(m,s)}(i',j') - (i',j')) \right\|^2 / 4 \quad --- \quad (11)$$

where $\|(x,y)\| = \sqrt{x^2 + y^2}$ --- (12) and f(i',j') is defined to be zero for i'<0 and j'<0. $E_0$ is determined by the distance between (i,j) and f(i,j). $E_0$ prevents a pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D_f^{(m,s)} = \sum_{i=0}^{i=2^m-1} \sum_{j=0}^{j=2^m-1} D_{(i,j)}^{(m,s)} \qquad --- \quad (13)$$

[1. 3. 2. 3] Total energy of the mapping

The total energy of the mapping, that is, a combined evaluation equation which relates to the combination of a plurality of evaluations, is defined as $\lambda C_{(i,j)}^{(m,s)} + D_f^{(m,s)}$, where $\lambda \geqq 0$ is a real number. The goal is to detect a state in which the combined evaluation equation has an extreme value, namely, to find a mapping which gives the minimum energy expressed by the following (14).

$$\min_f \{\lambda C_f^{(m,s)} + D_f^{(m,s)}\} \qquad --- \quad (14)$$

Care must be exercised in that the mapping becomes an identity mapping if $\lambda$=0 and $\eta$=0 (i.e., f(m,s)(i,j)=(i,j) for all i=0,1,...,2$^m$-1 and j=0,1,...,2$^m$-1). As will be described later, the mapping can be gradually modified or transformed from an identity mapping since the case of $\lambda$=0 and $\eta$=0 is evaluated at the outset in the base technology. If the combined evaluation equation is defined as $C_f^{(m,s)} + \lambda D_f^{(m,s)}$ where the original position of $\lambda$ is changed as such, the equation with $\lambda$=0 and $\eta$=0 will be $C_f^{(m,s)}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad \text{---} \quad (15)$$

$p^{(m-1,s)}_{(i',j')}$ and $q^{(m-1,s)}_{(i',j')}$ are respectively called the parents of $p^{(m,s)}_{(i,j)}$ and $q^{(m,s)}_{(i,j)}$, where [x] denotes the largest integer not exceeding x. Conversely, $p^{(m,s)}_{(i,j)}$ and $q^{(m,s)}_{(i,j)}$ are the child of $p^{(m-1,s)}_{(i',j')}$ and the child of $q^{(m-1,s)}_{(i',j')}$, respectively. A function parent(i,j) is defined by the following (16).

$$parent(i, j) = (\left\lfloor \frac{i}{2} \right\rfloor, \left\lfloor \frac{j}{2} \right\rfloor) \qquad \text{---} \quad (16)$$

A mapping between $p^{(m,s)}_{(i,j)}$ and $q^{(m,s)}_{(k,l)}$ is determined by computing the energy and finding the minimum thereof. The value of $f^{(m,s)}(i,j)=(k,1)$ is determined as follows using f(m-1,s) (m=1,2,...,n). First of all, imposed is a condition that $q^{(m,s)}_{(k,l)}$ should lie inside a quadrilateral defined by the following (17) and (18). Then, the applicable mappings are narrowed down by selecting ones that are thought to be reasonable or natural among them satisfying the BC.

$$q^{(m,s)}_{g^{(m,s)}(i-1,j-1)} q^{(m,s)}_{g^{(m,s)}(i-1,j+1)} q^{(m,s)}_{g^{(m,s)}(i+1,j+1)} q^{(m,s)}_{g^{(m,s)}(i+1,j-1)} \qquad (17)$$

where

$$g^{(m,s)}(i,j) = f^{(m-1,s)}(parent(i,j)) + f^{(m-1,s)}(parent(i,j) + (1,1)) \qquad (18)$$

The quadrilateral defined above is hereinafter referred to as the inherited quadrilateral of $p^{(m,s)}_{(i,j)}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p^{(m,s)}_{(i,j)}$ should be mapped to the pixel $q^{(m,s)}_{f^{(m)}(i,j)}$ which exists inside the inherited quadrilateral A'B'C'D'. Thereby, bridging from the mapping at the (m-1)th level to the mapping at the m-th level is achieved.

The energy $E_0$ defined above is now replaced by the following (19) and (20)

$$E_{0(i,j)} = \left\| f^{(m,0)}(i,j) - g^{(m)}(i,j) \right\|^2 \qquad (19)$$

$$E_{0(i,j)} = \left\| f^{(m,s)}(i,j) - f^{(m,s-1)}(i,j) \right\|^2, (1 \le i) \qquad (20)$$

for computing the submapping $f^{(m,0)}$ and the submapping $f^{(m,s)}$ at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between $f^{(m,s)}(i,j)$ and the location where (i,j) should be mapped when regarded as a part of a pixel at the (m-1)the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of $f^{(m,s)}(i,j)$. L is increased until such a pixel is found or L reaches its upper bound $L_{max}^{(m)}$. $L_{max}^{(m)}$ is fixed for each level m. If no such a pixel is found at all, the third condition of the BC is ignored temporarily and such mappings that caused the area of the transformed quadrilateral to become zero (a point or a line) will be permitted so as to determine $f^{(m,s)}(i,j)$. If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C_f^{(m,s)}$ for each submapping generally becomes smaller. This basically means that the two images are matched better. However, if $\lambda$ exceeds the optimal value, the following phenomena (1 - 4) are caused.

1. Pixels which should not be corresponded are erroneously corresponded only because their intensities are close.
2. As a result, correspondence between images becomes inaccurate, and the mapping becomes invalid.
3. As a result, $D_f^{(m,s)}$ in the equation 14 tends to increase abruptly.
4. As a result, since the value of the equation 14 tends to increase abruptly, $f^{(m,s)}$ changes in order to suppress the abrupt increase of $D_f^{(m,s)}$. As a result, $C_f^{(m,s)}$ increases.

Therefore, a threshold value at which $C_f^{(m,s)}$ turns to an increase from a decrease is detected while a state in which the equation (14) takes the minimum value with $\lambda$ being increased is kept. Such $\lambda$ is determined as the optimal value at $\eta=0$. Then, the behavior of $C_f^{(m,s)}$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of $\lambda$

$\lambda$ is increased from 0 at a certain interval, and the a subimage is evaluated each time the value of $\lambda$ changes. As shown in the equation (14), the total energy is defined by $\lambda C_f^{(m,s)} + D_f^{(m,s)}$. $D_f^{(m,s)}$ in the equation (9) represents the smoothness and theoretically becomes minimum when it is the identity mapping. $E_0^{(i,j)}$ and $E_1$ increase as the mapping is further distorted. Since $E_1$ is an integer, 1 is the smallest step of $D_f^{(m,s)}$. Thus, that changing the mapping reduces the total energy is impossible unless a changed amount (reduction amount) of the current $\lambda C_f^{(m,s)}$ is equal to or greater than 1. Since $D_f^{(m,s)}$ increases by more than 1 accompanied by the change of the mapping, the total energy is not reduced unless $\lambda C_{(i,j)}^{(m,s)}$ is reduced by more than 1.

Under this condition, it is shown that $C_{(i,j)}^{(m,s)}$ decreases in normal cases as $\lambda$ increases. The histogram of $C_{(i,j)}^{(m,s)}$ is denoted as h(l), where h(l) is the number of pixels whose energy $C_{(i,j)}^{(m,s)}$ is $l^2$. In order that $\lambda l^2 \geqq 1$, for example,

the case of $I^2=1/\lambda$ is considered. When $\lambda$ varies from $\lambda_1$ to $\lambda_2$, a number of pixels (denoted A) expressed by the following (21)

$$A = \sum_{l=\left\lceil\frac{1}{\lambda_2}\right\rceil}^{\left\lceil\frac{1}{\lambda_1}\right\rceil} h(l) \cong \int_{l=\frac{1}{\lambda_2}}^{\frac{1}{\lambda_1}} h(l)dl = -\int_{\lambda_2}^{\lambda_1} h(l)\frac{1}{\lambda^{3/2}}d\lambda = \int_{\lambda_1}^{\lambda_2}\frac{h(l)}{\lambda^{3/2}}d\lambda \qquad --- \quad (21)$$

changes to a more stable state having the energy (22) which is

$$C_f^{(m,s)} - I^2 = C_f^{(m,s)} - \frac{1}{\lambda}. \tag{22}$$

Here, it is assumed that all the energy of these pixels is approximated to be zero. It means that the value of $C_{(i,j)}^{(m,s)}$ changes by (23).

$$\partial C_f^{(m,s)} = -\frac{A}{\lambda} \tag{23}$$

As a result, the equation (24) holds.

$$\frac{\partial C_f^{(m,s)}}{\partial\lambda} = -\frac{h(l)}{\lambda^{5/2}} \tag{24}$$

Since h(l)>0 , $C_f^{(m,s)}$ decreases in normal case. However, when $\lambda$ tends to exceed the optimal value, the above phenomenon that is characterized by the increase in $C_f^{(m,s)}$ occurs. The optimal value of $\lambda$ is determined by detecting this phenomenon.
When

$$h(l) = HI^k = \frac{H}{\lambda^{k/2}} \tag{25}$$

is assumed where both H(h>0) and k are constants, the equation (26) holds.

$$\frac{\partial C_f^{(m,s)}}{\partial\lambda} = -\frac{H}{\lambda^{5/2+k/2}} \tag{26}$$

Then, if k≠-3, the following (27) holds.

$$C_f^{(m,s)} = C + \frac{H}{(3/2 + k/2)\lambda^{3/2+k/2}} \tag{27}$$

The equation (27) is a general equation of $C_f^{(m,s)}$ (where C is a constant).
When detecting the optimal value of $\lambda$, the number of pixels violating the BC may be examined for safety. In the course of determining a mapping for each pixel, the probability of violating the BC is assumed $p_0$ here. In that case, since

$$\frac{\partial A}{\partial\lambda} = \frac{h(l)}{\lambda^{3/2}} \tag{28}$$

holds, the number of pixels violating the BC increases at a rate of the equation (29).

$$B_0 = \frac{h(l)\,p_0}{\lambda^{3/2}} \tag{29}$$

Thus,

$$\frac{B_0\lambda^{3/2}}{p_0 h(l)} = 1 \tag{30}$$

is a constant. If assumed that $h(l)=H1^k$, the following (31), for example,

$$B_0\lambda^{3/2+k/2} = p_0 H \tag{31}$$

becomes a constant. However, when $\lambda$ exceeds the optimal value, the above value of (31) increases abruptly. By detecting this phenomenon, whether or not the value of $B_0\lambda^{3/2+k/2}/2^m$ exceeds an abnormal value $B_{0thres}$ exceeds is inspected, so that the optimal value of can be determined. Similarly, whether or not the value of $B_1\lambda^{3/2+k/2}/2^m$ exceeds an abnormal value $B_{1thres}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C_f^{(m,s)}$.

In the experimentation, the computation of $f^{(m,s)}$ is stopped and then the computation of $f^{(m,s+1)}$ is started when $\lambda$ exceeded 0.1. That is because the computation of submappings is affected by the difference of mere 3 out of 255 levels in the pixel intensity when $\lambda>0.1$, and it is difficult to obtain a correct result when $\lambda>0.1$.

[1. 4. 2] Histogram h(l)

The examination of $C_f^{(m,s)}$ does not depend on the histogram $h(l)$. The examination of the BC and its third condition may be affected by the $h(l)$. k is usually close to 1 when $(\lambda, C_f^{(m,s)})$ is actually plotted. In the experiment, k=1 is used, that is, $B_0\lambda^2$ and $B_1\lambda^2$ are examined. If the true value of k is less than 1, $B_0\lambda^2$ and $B_1\lambda^2$ does not become constants and increase gradually by the factor of $\lambda^{(1-k)/2}$. If $h(l)$ is a constant, the factor is, for example, $\lambda^{1/2}$. However, such a difference can be absorbed by setting the threshold $B_{0thres}$ appropriately.

Let us model the source image by a circular object with its center at $(x_0,y_0)$ and its radius r, given by:

$$p(i, j) = \begin{cases} \dfrac{255}{r} c(\sqrt{(i-x_0)^2 + (j-y_0)^2})...(\sqrt{(i-x_0)^2 + (j-y_0)^2} \le r) \\ 0...(otherwise) \end{cases}$$

$$---(32)$$

and the destination image given by:

$$q(i, j) = \begin{cases} \dfrac{255}{r} c(\sqrt{(i-x_1)^2 + (j-y_1)^2})...(\sqrt{(i-x_1)^2 + (j-y_1)^2} \le r) \\ 0...(otherwise) \end{cases}$$

$$--- (33)$$

with its center at $(x_1,y_1)$ and radius r. Let c(x) has the form of $c(x)=x^k$. When the centers $(x_0,y_0)$ and $(x_1,y_1)$ are sufficiently far from each other, the histogram h(1) is then in the form of:

$$h(l) \propto rl^k (k \neq 0) \tag{34}$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \leqq k \leqq 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

[1. 4. 3] Dynamic determination of η

The parameter η can also be automatically determined in the same manner. Initially, η is set to zero, and the final mapping $f^{(n)}$ and the energy $C_f^{(n)}$ at the finest resolution are computed. Then, after η is increased by a certain value $\Delta\eta$ and the final mapping $f^{(n)}$ and the energy $C_f^{(n)}$ at the finest resolution are again computed. This process is repeated until the optimal value is obtained. η represents the stiffness of the mapping because it is a weight of the following equation (35).

$$E_{0(i,j)}^{(m,s)} = \left\| f^{(m,s)}(i,j) - f^{(m,s-1)}(i,j) \right\|^2 \tag{35}$$

When η is zero, $D_f^{(n)}$ is determined irrespective of the previous submapping, and the present submapping would be elastically deformed and become too distorted. On the other hand, when η is a very large value, $D_f^{(n)}$ is almost completely determined by the immediately previous submapping. The submappings are then very stiff, and the pixels are mapped to almost the same locations. The resulting mapping is therefore the identity mapping. When the value of η increases from 0, $C_f^{(n)}$ gradually decreases as will be described later. However, when the value of η exceeds the optimal value, the energy starts increasing as shown in Fig. 4. In Fig. 4, the x-axis represents η, and y-axis represents $C_f$.

The optimum value of η which minimizes $C_f^{(n)}$ can be obtained in this manner. However, since various elements affects the computation compared to the case of λ, $C_f^{(n)}$ changes while slightly fluctuating. This difference is caused because a submapping is re-computed once in the case of λ whenever an input changes slightly, whereas all the submappings must be re-computed in the case of η. Thus, whether the obtained value of $C_f^{(n)}$ is the minimum or not cannot be judged instantly. When candidates for the minimum value are found, the true minimum needs to be searched by setting up further finer interval.

[1. 5] Supersampling

When deciding the correspondence between the pixels, the range of $f^{(m,s)}$ can be expanded to R X R (R being the set of real numbers) in order to increase the degree of freedom. In this case, the intensity of the pixels of the destination image is interpolated, so that $f^{(m,s)}$ having the intensity at non-integer points

$$V(q_{f^{(m,s)}(i,j)}^{(m,s)}) \tag{36}$$

is provided. Namely, supersampling is performed. In its actual implementation, $f^{(m,s)}$ is allowed to take integer and half integer values, and

$$V(q_{(i,j)+(0.5,0.5)}^{(m,s)}) \tag{37}$$

is given by

$$(V(q_{(i,j)}^{(m,s)}) + V(q_{(i,j)+(1,1)}^{(m,s)}))/2 \tag{38}$$

[1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

For example, the matching between a human face and a cat's face is computed as shown in Figs. 20(a) and 20(b). The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

[1. 7] Implementation

In the implementation, utilized is a heuristic method where the computation proceeds linearly as the source image is scanned. First, the value of $f^{(m,s)}$ is determined at the top leftmost pixel (i,j)=(0,0). The value of each $f^{(m,s)}$(i, j) is then determined while i is increased by one at each step. When i reaches the width of the image, j is increased by one and i is reset to zero. Thereafter, $f^{(m,s)}$(i,j) is determined while scanning the source image. Once pixel correspondence is determined for all the points, it means that a single mapping $f^{(m,s)}$ is determined.

When a corresponding point $q_{f(i,j)}$ is determined for $p_{(i,j)}$, a corresponding point $q_{f(i,j+1)}$ of $p_{(i,j+1)}$ is determined next. The position of $q_{f(i,j+1)}$ is constrained by the position of $q_{f(i,j)}$ since the position of $q_{f(i,j+1)}$ satisfies the BC. Thus, in this system, a point whose corresponding point is determined earlier is given higher priority. If the situation continues in which (0,0) is always given the highest priority, the final mapping might be unnecessarily biased. In order to avoid this bias, $f^{(m,s)}$ is determined in the following manner in the base technology.

First, when (s mod 4) is 0, $f^{(m,s)}$ is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, $f^{(m,s)}$ is computed continuously in two directions on the assumption that s=0 and s=2.

In the actual implementation, the values of $f^{(m,s)}$(i,j) (m=0,...,n) that satisfy the BC are chosen as much as possible, from the candidates (k,l) by awarding a penalty to the candidates violating the BC. The energy $D_{(k,l)}$ of the candidate that violates the third condition of the BC is multiplied by $\phi$ and that of a candidate that violates the first or second condition of the BC is multiplied by $\psi$. In the actual implementation, $\phi=2$ and $\psi=100000$ are used.

In order to check the above-mentioned BC, the following test is performed as the actual procedure when determining (k,l)=$f^{(m,s)}$(i,j). Namely, for each grid point (k,l) in the inherited quadrilateral of $f^{(m,s)}$(i,j), whether or not the z-component of the outer product of

$$W = \vec{A} \times \vec{B} \tag{39}$$

is equal to or greater than 0 is examined, where

$$\vec{A} = \overrightarrow{q_{f^{(m,s)}(i,j-1)}^{(m,s)} \, q_{f^{(m,s)}(i+1,j-1)}^{(m,s)}} \tag{40}$$

$$\vec{B} = \overrightarrow{q_{f^{(m,s)}(i,j-1)}^{(m,s)} \, q_{(k,l)}^{(m,s)}} \tag{41}$$

Here, the vectors are regarded as 3D vectors and the z-axis is defined in the orthogonal right-hand coordinate system. When W is negative, the candidate is awarded a penalty by multiplying $D_{(k,l)}^{(m,s)}$ by $\psi$ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping $f^{(m,s)}$(i,j+1) for the adjacent pixel at (i,j+1), there is no pixel on the source image plane that satisfies the BC if the z-component of W is negative because then $q_{(k,l)}^{(m,s)}$ passes the boundary of the adjacent quadrilateral.

[1. 7. 1] The order of submappings

In the actual implementation, $\sigma(0)=0$, $\sigma(1)=1$, $\sigma(2)=2$, $\sigma(3)=3$, $\sigma(4)=0$ were used when the resolution level was even, while $\sigma(0)=3$, $\sigma(1)=2$, $\sigma(2)=1$, $\sigma(3)=0$, $\sigma(4)=3$ were used when the resolution level was odd. Thus, the submappings are shuffled in an approximately manner. It is to be noted that the submapping is primarily of four types, and s may be any one among 0 to 3. However, a processing with s=4 was actually performed for the reason described later.

[1. 8] Interpolations

After the mapping between the source and destination images is determined, the intensity values of the corresponding pixels are interpolated. In the implementation, trilinear interpolation is used. Suppose that a square $p_{(i,j)}p_{(i+1,j)}p_{(i+1,j+1)}p_{(i,j+1)}$ on the source image plane is mapped to a quadrilateral $q_{f(i,j)}q_{f(i+1,j)}q_{f(i+1,j+1)}q_{f(i,j+1)}$ on the destination image plane. For simplicity, the distance between the image planes is assumed 1. The intermediate image pixels r(x,y,t) ($0 \leqq x \leqq N-1$, $0 \leqq y \leqq M-1$) whose distance from the source image plane is t ($0 \leqq t \leqq 1$) are obtained as follows. First, the location of the pixel r(x,y,t), where x,y,t∈R, is determined by the equation (42).

$$(x, y) = (1 - dx)(1 - dy)(1 - t)(i, j) + (1 - dx)(1 - dy)tf(i, j)$$

$$+ dx (1 - dy)(1 - t)(i + 1, j) + dx(1 - dy)tf(i + 1, j)$$

$$+ (1 - dx)dy(1 - t)(i, j + 1) + (1 - dx)dytf(i, j + 1)$$

$$+ dxdy(1 - t)(i + 1, j + 1) + dxdytf(i + 1, j + 1) \qquad (42)$$

The value of the pixel intensity at r(x,y,t) is then determined by the equation (43).

$$V(r(x,y,t)) = (1-dx)(1-dy)(1-t)V(p_{(i,j)}) + (1-dx)(1-dy)tV(q_{f(i,j)})$$

$$+ dx(1-dy)(1-t)V(p_{(i+1,j)}) + dx(1-dy)tV(q_{f(i+1,j)})$$

$$+ (1-dx)dy(1-t)V(p_{(i,j+1)}) + (1-dx)dytV(q_{f(i,j+1)})$$

$$+ dxdy(1-t)V(p_{(i+1,j+1)}) + dxdytV(q_{f(i+1,j+1)}) \qquad (43)$$

where dx and dy are parameters varying from 0 to 1.

[1. 9] Mapping to which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.

The approximate mapping F is determined in the following manner. First, the mapping for several pixels are specified. When $n_s$ pixels

$$p(i_0,j_0), \; p(i_1,j_1),...,p(i_{n_s-1},j_{n_s-1}) \qquad (44)$$

of the source image are specified, the following values in the equation (45) are determined.

$$F^{(n)}(i_0, j_0) = (k_0, l_0),$$

$$F^{(n)}(i_1, j_1) = (k_1, l_1), \ldots,$$

$$F^{(n)}(i_{n_s-1}, j_{n_s-1}) = (k_{n_s-1}, l_{n_s-1}) \tag{45}$$

For the remaining pixels of the source image, the amount of displacement is the weighted average of the displacement of $p(i_h, j_h)$ (h=0,..., $n_s$ -1). Namely, a pixel $p_{(i,j)}$ is mapped to the following pixel (expressed by the equation (46)) of the destination image.

$$F^{(m)}(i, j) = \frac{(i, j) + \sum_{h=0}^{h=n_s-1}(k_h - i_h, l_h - j_h)weight_h(i, j)}{2^{n-m}} \qquad --- \quad (46)$$

where

$$weight_h(i,j) = \frac{1/\|(i_h - i, j_h - j)\|^2}{total\_weight\,(i,\,j)} \tag{47}$$

where

$$total\_weight(i, j) = \sum_{h=0}^{h=n_s-1} 1/\|(i_h - i, j_h - j)\|^2 \qquad --- \quad (48)$$

Second, the energy $D_{(i,j)}^{(m,s)}$ of the candidate mapping f is changed so that mapping f similar to $F^{(m)}$ has a lower energy. Precisely speaking, $D_{(i,j)}^{(m,s)}$ is expressed by the equation (49).

$$D_{(i,j)}^{(m,s)} = E_{0(i,j)}^{(m,s)} + \eta E_{1(i,j)}^{(m,s)} + \kappa E_{2(i,j)}^{(m,s)} \tag{49}$$

$$E_{2(i,j)}^{(m,s)} = \begin{cases} 0, & if \left\|F^{(m)}(i, j) - f^{(m,s)}(i, j)\right\|^2 \le \left\lfloor \dfrac{\rho^2}{2^{2(n-m)}} \right\rfloor \\ \left\|F^{(m)}(i, j) - f^{(m,s)}(i, j)\right\|^2, & otherwise \end{cases} \qquad --- \quad (50)$$

where $\kappa$, $\rho \geqq 0$. Finally, the mapping f is completely determined by the above-described automatic computing process of mappings.

Note that $E_{2(i,j)}^{(m,s)}$ becomes 0 if $f^{(m,s)}(i,j)$ is sufficiently close to $F^{(m)}(i,j)$ i.e., the distance therebetween is equal to or less than

$$\left\lfloor \frac{\rho^2}{2^{2(n-m)}} \right\rfloor \qquad --- \quad (51)$$

It is defined so because it is desirable to determine each value $f^{(m,s)}(i,j)$ automatically to fit in an appropriate place in the destination image as long as each value $f^{(m,s)}(i,j)$ is close to $F^{(m)}(i,j)$. For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.

Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.

Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is $2^n X 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$, $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1)th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1)th levels of resolution. Referring to Fig. 9, respective values represent the intensity of respective pixels. $p^{(m,s)}$ symbolizes four images $p(m, 0)$ through $p^{(m,3)}$, and when generating $p^{(m-1,0)}$, $p^{(m,s)}$ is regarded as $p^{(m,0)}$. For example, as for the block shown in Fig. 9, comprising four pixels with their pixel intensity values indicated inside, images $p^{(m-1,0)}$, $p^{(m-1,1)}$, $p^{(m-1,2)}$ and $p^{(m-1,3)}$ acquire "3", "8", "6" and "10", respectively, according to the rules described in [1.2]. This block at the m-th level is replaced at the (m-1)th level by respective single pixels acquired thus. Therefore, the size of the subimages at the (m-1)th level is $2^{m-1} X 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C_f^{(m,s)}$ concerning a pixel value, introduced in [1.3.2.1], and the energy $D_f^{(m,s)}$ concerning the smoothness of the mapping introduced in [1.3.2.2]. Next, by combining these evaluation equations, a combined evaluation equation is set (S31). Such the combined evaluation equation includes $\lambda C_{(i,j)}^{(m,s)} + D_f^{(m,s)}$. Using $\eta$ introduced in [1.3.2.2], we have

$$\Sigma\Sigma(\lambda C_{(i,j)}^{(m,s)} + \eta E_{0(i,j)}^{(m,s)} + E_{1(i,j)}^{(m,s)}) \tag{52}$$

In the equation (52) the sum is taken for each i and j where i and j run through 0, 1,... , $2^{m-1}$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter $\eta$ and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1,s)}$ is searched within $q^{(1,s)}$, the following procedure is adopted.

1. An upper left point a, an upper right point b, a lower left point c and a lower right point d with respect to the point x are obtained at the first level of resolution.
2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.
3. The corresponding points A' to D' of the pixels A to D, which have already been defined at the 0-th level, are plotted in $q^{(1,s)}$. The pixels A' to C' are virtual pixels and regarded to be located at the same positions as the pixels A to C.
4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.
5. The corresponding points b' to d' are plotted by using the same method as the above 4 so as to produce an inherited quadrilateral defined by the points a' to d'.
6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping $f^{(n)}$ at the n-th level is determined. This mapping is denoted as $f^{(n)}(\eta=0)$ because it has been determined relative to $\eta=0$.

Next, to obtain the mapping with respect to other different $\eta$, $\eta$ is shifted by $\Delta\eta$ and m is reset to zero (S24). After confirming that new $\eta$ does not exceed a predetermined search-stop value $\eta_{max}$(S25), the process returns to S21 and the mapping $f^{(n)}$ ($\eta = \Delta\eta$) relative to the new $\eta$ is obtained. This process is repeated while obtaining $f^{(n)}$ ($\eta = i\Delta\eta$) ($i = 0,1,..$) at S21. When $\eta$ exceeds $\eta_{max}$, the process proceeds to S26 and the optimal $\eta=\eta_{opt}$ is determined using a method described later, so as to let $f^{(n)}$ ($\eta=\eta_{opt}$) be the final mapping $f^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$ is defined independently for each submapping in the base technology.

Referring to Fig. 15, s and $\lambda$ are first reset to zero (S210). Then, obtained is the submapping $f^{(m,s)}$ that minimizes the energy with respect to the then $\lambda$ (and, implicitly, $\eta$) (S211), and the thus obtained is denoted as $f^{(m,s)}(\lambda=0)$. In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping $f^{(m,s)}$ ($\lambda=\Delta\lambda$) relative to the new $\lambda$ is obtained. This process is repeated while obtaining $f^{(m,s)}(\lambda =i\Delta\lambda)$ ($i = 0,1,...$). When $\lambda$ exceeds $\lambda_{max}$, the process proceeds to S214 and the optimal $\lambda=\lambda_{opt}$ is determined , so as to let $f^{(n)}(\lambda=\lambda_{opt})$ be the final mapping $f^{(m,s)}$ (S214).

Next, in order to obtain other submappings at the same level, $\lambda$ is reset to zero and s is incremented (S215). After confirming that s does not exceed 4 (S216), return to S211. When s=4, $f^{(m,0)}$ is renewed utilizing $f^{(m,3)}$ as described above and a submapping at that level is determined.

Fig. 16 shows the behavior of the energy $C_f^{(m,s)}$ corresponding to $f^{(m,s)}$ ($\lambda = i\Delta\lambda$) ($i = 0,1,...$) for a certain m and s while varying $\lambda$. Though described in [1.4], as $\lambda$ increases, $C_f^{(m,s)}$ normally decreases but changes to increase after $\lambda$ exceeds the optimal value. In this base technology, $\lambda$ in which $C_f^{(m,s)}$ becomes the minima is defined as $\lambda_{opt}$. As observed in Fig. 16, even if $C_f^{(m,s)}$ turns to decrease again in the range $\lambda>\lambda_{opt}$, the mapping will be spoiled by then and becomes meaningless. For this reason, it suffices to pay attention to the first occurring minima value. $\lambda_{opt}$ is independently determined for each submapping including $f^{(n)}$.

Fig. 17 shows the behavior of the energy $C_f^{(n)}$ corresponding to $f^{(n)}(\eta = i\Delta\eta)$ ($i = 0,1,...$) while varying $\eta$. Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, $f^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot}=\alpha E_0+E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$, two parameters such as $\eta$ and $\lambda$ in the base technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0+\beta E_1$, for instance, may be taken up as the combined evaluation equation, where $\alpha+\beta=1$ is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

**Preferred embodiments concerning an image matching which set a region to be examined**

Hereunder describes image matching techniques partly utilizing the above-described base technology.

Fig. 18 shows the structure of an image matching apparatus 10. The apparatus 10 comprises an image input unit 12 which acquires a first and a second key frames KFs from outside, a matching processor 14 which performs computation regarding corresponding points between the key frames using the base technology, a stream generator 16 which generates a coded data stream CDS or a coded bit stream CBS (hereinafter simply referred to as a "stream") incorporating the information of the key frames and the information of the corresponding points CI, an interval detecting unit which detects information regarding the time interval of the key frames (hereinafter referred to as "interval information") acquired by the unit 12 and a region setting unit 20 which acquires the detected interval information and sets a region to be examined in the matching processor 14 by specifying this information in a table 22.

The interval information may be, for example, included in the header region of the key frames, described in another file but the file of the key frames or imprinted into the data region of the key frames as a watermark or the like. In any case, the interval detecting unit 18 has prior knowledge about a method by which the interval information is stored and detects the information with a known method.

Fig. 19 shows an example of the structure of the table 22. The table 22 comprises a column 40 for the interval information and a column 42 for the regions to be examined. The detected interval information is described in the column 40 and the region to be examined corresponding to each interval information is described in the column 42. The interval information is, for example, described as "none," "0.03 second," "camera type A" or "camera type B" in the column 40.

The "none" corresponds to the key frames which are not supported by this system and in this case the region to be examined is set to "entire image," which is a default region. This is because it can be regarded that there is no basis for limiting the region to be examined being provided no information.

The "0.03 second" corresponds to a normal motion picture with 30 image frames a second and in this case the region to be examined is set to "1/4 of image". In other words, the region to be examined in a second key frame in which a point corresponding to a certain pixel p0 in the first key frame is limited to the region of 1/4 size of the key frames, at the center of which exists a pixel located at same position as the pixel p0. The expression of "1/4" may be considered as to be 1/4 size of an image both in length and width. The expression itself can be, however, considered more flexibly.

The "camera type A" shows a product number, quality and shutter speed of a camera used for shooting the key frames. Namely, the attribute of the camera is shown therein to estimate or specify the interval of the key frames. In this case, the region to be examined is set to "1/10 of image".

The "camera type B" has similar meaning. A camera with an extremely high shutter speed is, however, supposed to be used in this case, and as a result, the region to be examined is set to "three pixels." Fig. 20 shows a region to be examined 30 in that case. It is shown therein that a point in the second key frame corresponding to a point of a pixel p0 in the first key frame, which is being observed, is searched for in the region limited to three pixels in four directions from a pixel located at same position as the pixel p0.

Hereunder describes the reason for limiting the region to be examined. When the shutter speed of a camera is sufficiently high, the movement of an object between the key frames is generally small. If the region to be examined is set to the entire second key frame ignoring the general fact described above, a computing cost naturally comes to be required for searching a meaningless region in the second key frame. It sometimes happens, moreover, that the corresponding point found in such meaningless region cannot be the true corresponding point physically, and therefore limiting the region to be examined in advance, though it depends on situations, improves the accuracy of detecting the corresponding point.

As actual processing, for example, the region to be examined can be limited by excluding the points which are out of the specified region from the candidate of corresponding point by making the energies of those points larger. As another solution, the region to be examined can also be limited by simply narrowing interval between the beginning and the finishing of the processing loop for the search so that the interval might be correspondent to the limited region.

The region to be examined is limited based on the time interval of the key frames in this embodiment. Besides this manner, the region setting unit 20, for example, may detect the motion speed of an object or the distance to the object and then may set the region to be examined by utilizing the detected information as fundamental information for computing the possible quantity of the movement of the object between the key frames.

The image matching technology is now described. This embodiment is only an example and therefore there are many variations. A few variations are as follows.

In the preferred embodiments, the key frames are acquired from outside. The processing may be, however, performed on a first and a second key frames shot with a camera, inside of which is equipped the image matching apparatus 10. In this case, the camera comprises a shooting unit which shots the key frames functioning as an image input unit, a matching processor which generates the information of the corresponding points between the key frames and a region setting unit which sets the region to be examined in the second key frame in which a point corresponding to a point in the first key frame is searched for by the matching processor based on the time interval of the key frames.

The image matching apparatus 10 according to the preferred embodiments, not only the camera described above, may be provided with a stream generator which forms the information of the corresponding points generated by the matching processor and the key frames as encoded data. A fixed or removable storage unit which stores the encoded data and/or a communication unit which transmits the data to outside may also be provided.

Although the present invention has been described by way of exemplary embodiments, it should be understood that many changes and substitutions may be made by those skilled in the art without departing from the spirit and the scope of the present invention which is defined only by the appended claims.

**Claims**

1. An image matching method, wherein a region to be examined in a second key frame in which a point corresponding to a point in a first key frame is searched for is limited based on time interval of the key frames, in generating information of the corresponding points between the key frames.

2. A method according to Claim 1, wherein the time interval is specified according to a camera used for shooting the key frames or shutter speed of the camera.

3. A method according to any one of Claims 1 and 2, wherein the time interval and the key frames are stored associated with each other and then information regarding the time interval is read out and utilized at a stage of matching.

4. A method according to any one of Claims 1 to 3, wherein when satisfactory corresponding point is not found in the limited region, matching result indicating the fact is informed to a user.

5. A method according to any one of Claims 1 to 3, wherein the corresponding point is searched for outside the limited region when the satisfactory corresponding point is not found in the limited region.

6. An image matching apparatus (10) comprising:

   an image input unit (12) which acquires a first and a second key frames;
   a matching processor (14) which generates information of corresponding points between the first and the second key frames; and
   a region setting unit (20) which sets, based on time interval of the key frames, a region to be examined in the second key frame in which a point corresponding to a point in the first key frame is searched for by the matching processor (14).

7. An apparatus (10) according to Claim 6, further comprising:

   an interval detecting unit (18) which detects information regarding the time interval that is included in or added to the key frames; and
   a table (22) which describes correspondence between the detected information and the region to be examined,

wherein the region setting unit (20) sets the region by specifying the detected information in the table (22).

8. An apparatus (10) according to Claim 7, wherein the region setting unit (20) sets a predetermined default region as the region to be examined when the information regarding the time interval is not detected.

9. An apparatus (10) according to Claim 8, wherein the predetermined default region is the entire second key frame.

10. Computer software having program code for carrying out a method according to any one of Claims 1 to 5.

Fig.1a      Fig.1b

Fig.1c      Fig.1d

Fig.1e      Fig.1f

Fig.1g      Fig.1h

Fig.1i      Fig.1j

Fig.2R

Fig.2A

Fig.2E

Fig.2B

Fig.2D

Fig.2C

Fig. 3

## X Graph

Fig.4

$q^{(m)}_{f^{(m)}(i-1,j-1)}$

$q^{(m)}_{f^{(m)}(i,j-1)}$

$\vec{B}$

$\vec{A}$

$q^{(m)}_{(k,l)}$

$q^{(m)}_{f^{(m)}(i+1,j-1)}$

$q^{(m)}_{f^{(m)}(i-1,j)}$

# Fig.5a

$q^{(m)}_{f^{(m)}(i-1,j-1)}$

$q^{(m)}_{f^{(m)}(i,j-1)}$

$\vec{B}$

$q^{(m)}_{(k,l)}$

$\vec{A}$

$q^{(m)}_{f^{(m)}(i+1,j-1)}$

$q^{(m)}_{f^{(m)}(i-1,j)}$

# Fig.5b

START

S1

MULTI-
RESOLUTIONAL
FILTERING

S2

IMAGE MATCHING

END

Fig. 6

START S1

S10

HIERARCHIZE
SOURCE IMAGE

S11

HIERARCHIZE
DESTINATION IMAGE

END S1

Fig. 7

Fig. 8

p(m, s)

p(m-1, 0)

p(m-1, 1)

p(m-1, 2)

p(m-1, 3)

Fig. 9

$p^{(3)}$

$p^{(2,0)}$     $p^{(2,1)}$     $p^{(2,2)}$     $p^{(2,3)}$

$p^{(1,0)}$     $p^{(1,1)}$     $p^{(1,2)}$     $p^{(1,3)}$

$p^{(0,0)}$     $p^{(0,1)}$     $p^{(0,2)}$     $p^{(0,3)}$

Fig. 10

START PREPARA-
TION FOR S2

S30

SET TWO OR MORE
EVALUATION EQUATIONS

S31

SET INTEGRAL
EVALUATION EQUATION

END PREPARA-
TION FOR S2

Fig.11

START S2

$\eta \leftarrow 0$
$m \leftarrow 0$ — S20

COMPUTE
$f^{(m,s)} (\eta = i\Delta\eta)$
AT M LEVEL — S21

$m \leftarrow m+1$ — S22

$m > n$? — S23
N
Y

$\eta \leftarrow \eta + \Delta\eta$
$m \leftarrow 0$ — S24

$\eta > \eta_{max}$? — S25
N
Y

DETERMINE
$\eta_{opt}$ AND $f^{(n)}$ — S26

END S2

Fig.12

p(0, s)                    q(0, s)

## Fig.13

## Fig.14

Fig.15

Cf

λopt

λ

0

## Fig.16

Cf

ηopt

η

0

## Fig.17

KF

↓

IMAGE INPUT
UNIT — 12

↓ KF

INTERVAL
DETECTING
UNIT — 18

↓

REGION SETTING
UNIT ← TABLE

20                    22

MATCHING
PROCESSOR

14

CI

STREAM GENERATOR — 16

↓

CBS

10

**Fig.18**

40                                    42

| INTERVAL INFORMATION | REGION TO BE EXAMINED |
|---|---|
| NONE | ENTIRE IMAGE |
| 0.03 SECOND | 1 / 4 OF IMAGE |
| CAMERA TYPE A | 1 / 10 OF IMAGE |
| CAMERA TYPE B | THREE PIXELS |
| | |

22 : TABLE

# Fig.19

$p_0$

~30

**Fig.20**